# EUROPEAN PATENT APPLICATION

(11) **EP 0 861 807 A2**
(43) Date of publication of application: **02.09.1998**
(21) Application number: 98103002.6
(22) Date of filing: 20.02.1998
(51) Int. Cl.: C02F 1/00

(54) **Process for the treatment of liquid residues from photographic processes**

(30) Priority: 28.02.1997 DE 19708264
(71) Applicant: EASTMAN KODAK COMPANY, Rochester, New York 14650 (US)
(72) Inventor: Betz, Gerd, Dr., 73733 Aichwald (DE)
(74) Representative: Lewandowsky, Klaus, Dipl.-Ing.

(57) **Abstract**

Decribed are a process for the treatment of liquid residues from photographic processes, in which the residues are oxidized in stages and precipitated solids are then separated out, and in which the residues to be treated are subjected to:
(a) oxygen oxidization and
(b) oxygen-supported mild anodic oxidization and then
(c) ozone oxidization and
(d) are freed of precipitated solids by filtration after pH value setting and loading of auxiliary substances
and a device for performing this process.

## Description

The invention relates to a process for the treatment of liquid residues from photographic processes that for legal reasons may not be poured into waterways or into the public sewage system without being treated to remove the harmful substances contained in those residues.

The liquid residues generated in photographic processes and requiring treatment are in particular developing, fixing, bleaching, bleach fixing, stopping, interrupting and attenuating baths, and in some cases rinsing waters.

The harmful components in the residues to be removed are in particular metals such as silver and iron, compounds containing sulfur such as sulfites and thiosulfates, and also ammonium, complexing agents and reducing aromatic organic compounds such as hydroquinone, aminophenols and phenylene diamines.

The CSB values of the liquid residues to be treated can exceed 100,000 g/m³ and the BSB₅ values can be up to 50,000 g/m³.

The previously known processes for treating liquid residues from photographic processes, that can be encountered in - for example - doctors' surgeries, studios, radar and aircraft monitoring facilities, printing companies, photographic labs, hospitals, state photographic bodies, reproduction companies, PCB manufacturers etc., are generally based on desilvering the residue electrolytically, precipitating residual silver and other heavy metals using precipitating agents, such as H₂S or Na₂S, oxidizing sulfite and thiosulfate, precipitating the sulfate generated as calcium sulfate, and stripping the ammonium nitrogen in the form of ammonia.

A survey of wet-chemical treatment processes used to date for the purpose of treating liquid residues from photographic processes is provided in a working paper of the Baden-Württemberg State Ministry for Food, Agriculture and Forestry dated May 1986.

In this working paper, atmospheric oxygen and hydrogen peroxide are given as oxidization agents for the oxidization of sulfite and thiosulfate to sulfate and for the oxidization of organic harmful substances, such as hydroquinone in desilvered residues.

Ozone is known as a further oxidization agent, for example from the publication of the Society of Photographic Scientists and Engineers, Vol. 14, No. 4, June-July 1972, and Vol. 14, No. 5, August-September 1972, and from a work by T.W. Bober and T.J. Dagon published in the Journal WPCF, Vol. 47, No. 8, 1975, p. 2114-219.

Although a large degree of harmful substance reduction can be achieved with the previously known and applied processes, the requirements placed on harmful substance reduction in the wake of the increasing environmental awareness of the public are increasing too. This means that the legally permitted limit values for the individual harmful substances in the liquid residues are steadily being reduced by the authorities.

There is therefore a need for a process permitting liquid residues from photographic processes, e.g. photochemical wastes, to be treated with the maximum possible effectiveness.

A process is known from DE-OS 39 21 436 that comprises the following process steps:
1. transfer of continuously or discontinuously generated waste water into a storage tank;
2. ancillary biological treatment for preliminary reduction of substances capable of reaction here;
3. oxygen aeration using air or another oxygen-containing gas for the easily oxidizable components of the waste water;
4. ozone addition for sufficient residual oxidization of the hard-to-decompose constituents with simultaneous pH value control in two or more reactor stages; and
5. catalytic post-treatment by chemical and/or photochemical catalyzing OH radical reaction.

The core of this process is a combination of biological treatment and two oxidization stages. The catalytic post-treatment by chemical and/or photochemical catalyzing OH radical reaction of the process stage 5 is not described in further detail in DE-OS 39 21 436.

A process is furthermore known from DE 40 31 609 for treatment of liquid residues from photographic processes permitting a particularly effective reduction of harmful substances. The known process attempts the following in particular:
a) reduction of the CBS value by preferably more than 90 %;
b) as complete an oxidization as possible of sulfite and thiosulfate to sulfate;
c) as complete a destruction as possible of complexing agents, e.g. (NH₄)FeEDTA, EDTA and PDTA, and of complexes, e.g. [Fe(CN)₆]⁴⁻;
d) an effective reduction of the ammonium content;
e) as complete an elimination as possible of the iron content and
f) as complete an elimination as possible of the reaction products detectable by an AOX (absorbable organic halogenide compound) determination process.

The process known from DE 40 31 609 is characterized in that the residues to be treated are:
a) subjected to oxygen oxidization and
b) subjected to ozone oxidization,
c) halogenide ions are removed from the oxidized residue,
d) the residues largely freed of halogenide ions are subjected to an anodic post-oxidization, and to
e) cathodic reduction, then
f) neutralized and finally
g) freed by filtration from precipitated solids.

The object underlying the present invention is to further improve the process known from DE 40 31 609. The aim was to achieve, while further improving the quality of the treated waste water to be discharged into a waterway or public sewage system, a reduction in the costs of the process. In particular, an even greater destruction of complexing agents such as EDTA and PDTA was to be achieved, in order to further reduce drinking water pollution from their non-bio-degradable substances.

The process should furthermore be versatile to use, i.e. permit the treatment of a wide variety of liquid residues from photographic processes, for example of used/exhausted X-ray and repro developers, fixing baths, film and paper developing baths, bleach fixing baths and the like.

This object was attained in accordance with the invention in that the residues to be treated are subjected to:
(a) oxygen oxidization,
(b) oxygen-supported mild anodic oxidization and then
(c) ozone oxidization and
(d) are freed of precipitated solids by filtration after pH value setting and loading of auxiliary substances.

The process of the invention permits both the treatment of diluted residues, i.e. residues diluted to between 10 and 20 times their original volume using wash water or tap water after being generated in operation, and also the treatment of concentrated aqueous residues as occurring in operation. The treatment facility can furthermore be supplied with concentrated and diluted aqueous residues representing mixtures from the various baths, e.g. mixtures from the residues of thiosulfate-free baths such as developing baths, and thiosulfate-containing baths such as fixing baths and bleach fixing baths. It may however also be advantageous to optimize the process by supplying the treatment facility with thiosulfate-containing residues separately from those residues free or largely free of thiosulfate, and subjecting the thiosulfate-containing residues to a mild oxygen-supported anodic oxidization before passing them on to ozone oxidization.

It may further be advantageous to subject the residues to be treated in accordance with the stages (a) to (c) to a UV and H₂O₂-supported anodic post-oxidization.

Accordingly, the procedure according to a first advantageous embodiment of the invention is that the thiosulfate-free and thiosulfate-containing residues are subjected separately from one another to oxygen oxidization according to (a) and the resultant treated and thiosulfate-containing partial flow is subjected to oxygen-supported anodic oxidization before the combined partial flows are subjected to ozone oxidization.

According to a second advantageous embodiment of the invention the thiosulfate-free and thiosulfate-containing residues are subjected separately from one another to oxygen oxidization according to (a) and the resultant treated and thiosulfate-containing partial flow is subjected to oxygen-supported anodic oxidization before the combined partial flows are subjected to ozone oxidization, and ozone oxidization is followed by H₂O₂ and UV-light-supported anodic oxidization (post-oxidization) before the solids are precipitated and separated out.

According to a third particularly advantageous embodiment of the invention, ozone oxidization is supported by the addition of H₂O₂.

Further advantageous embodiments of the invention are shown in the sub-claims.

In the following, the individual process stages are described in detail:

### a) oxygen oxidization

The oxygen oxidization (aeration) serves to oxidize the comparatively easy-to-oxidize harmful substances, in particular sulfite. The oxygen oxidization is best achieved with air as the oxygen carrier, preferably by blowing air into the residues to be treated. It has become clear that the air distribution is of great importance. Oxygen oxidization can therefore be achieved by, for example, blowing in compressor air with the aid of a gas distributor that spreads the blown-in air as finely as possible. However, the use of the suction jet principle has proved even more effective, in which ambient air in a pump transfer circuit is drawn along and distributed evenly in the tank liquid. A second pump transfer circuit can also be advantageous for air loading. It has been found that the suction jet principle is twice as effective for thiosulfate-free and thiosulfate-containing residues as conventional compressors with gas distribution system. The progress of oxygen oxidization can be traced by, for example, continuous determination of the sulfite content. It has proved advantageous for the residues to be treated with air or with another oxygen-containing gas in stage (a) until 80 or 90 % of the sulfite originally present has oxidized into sulfate.

The increase in dissolved oxygen in thiosulfate-containing solutions results in the following anodic oxidization in stage (b) being feasible with a very low current intensity (instead of 100 to 200 A only 10 A) and without substantial generation of elementary sulfur. This obviates the need for difficult separation of the sulfur. Furthermore, the current yield can be increased by a factor of 10.

### b) anodic oxidization

The oxidization potential of the oxygen is not sufficient for effective oxidization of the thiosulfate, so the oxidization process during oxygen oxidization is not as required.

It has however become clear that thiosulfate can be oxidized by anodic oxidization using high current intensities. However, this generates a large amount of unwelcome elementary sulfur.

It has now been found that thiosulfate oxidization can be effectively performed even with very low current intensities, provided that as high a oxygen concentration as possible is generated in the thiosulfate-containing partial flow of the residues. This can, as already set forth, be achieved using the suction jet principle. Particularly high oxygen values of up to 30 mg 0₂/l can be achieved by using the residual oxygen from ozoning.

A "mild" anodic oxidization must therefore be understood as oxidization using low current intensities. Current intensities of 10 - 20 A can be advantageously used instead of the 100 - 200 A possible.

Known electrolysis cells with corrosion-resistant electrodes can be used for anodic oxidization. In accordance with a particularly advantageous embodiment of the invention, electrolysis cells are used with an anode material of titanium coated with noble-metal oxides (e.g. of platinum, rhodium and iridium and certain combinations thereof), which is particularly corrosion-resistant. Cells of this type are commercially available, for example under the designation enViro-Cell® from the company of the same name. In the case of the tests described later, modified cells with the designation enViro-Cell® were used, i.e. the membrane was removed and a special steel cylinder inserted as the cathode, on the surface of which a thin polyethylene film was loosely attached. In this way, thiosulfate in residues can be oxidized particularly quickly and effectively with a slightly acid pH value, without this resulting in noteworthy formation of elementary sulfur.

### c) ozone oxidization

The oxidization potential of the oxygen is known to be not sufficient for oxidizing many of the compounds present in the liquid residues to be treated and which are to be removed. Thiosulfate, ammonium and the organic developer compounds in particular cannot be oxidized in the manner necessary by oxygen oxidization. It has however become clear that the compounds not yet oxidized or not completely oxidized in stages (a) and (b) can be effectively oxidized by an oxidization using ozone. This applies in particular for the various organic compounds and for ammonium.

It has proved useful to continue the ozone treatment until the CSB value of the residues has been reduced by 60 to 70 %.

The ozone treatment can be performed by blowing an oxygen/ozone mixture produced by a standard ozone generator into the residues to be treated. The ozone generator can be fed with pure oxygen produced from liquid oxygen and/or with compressed air and returned residual gases generated during ozone oxidization.

In accordance with an advantageous embodiment of the invention, the ozone treatment is enhanced by the admixing of large quantities of H₂O₂ in order to achieve a shorter treatment time. This achieves in particular a faster oxidization of the complexing agents such as EDTA and PDTA.

### d) anodic post-oxidization

The anodic post-oxidization performed in one or more electrolysis cells is used to complete the oxidization process and to further reduce the CSB value to the targeted magnitude of approx. 10 % by weight of the initial value of the untreated residues. Anodic post-oxidization pursues in particular the aim of rapidly oxidizing even those harmful substances that withstood the first oxidisation stages (a), (b) and (c). In fact it is possible with suitable electrolysis cells having corresponding anode material and at relatively high overvoltages even to oxidize the remaining hard-to-oxidize compounds, such as aliphatic compounds, and also those originating from the oxidization stage (c).

A separation of the anode and cathode areas is necessary. This separation of the anode and cathode areas can be advantageously achieved using a diaphragm, which can be of porous polyethylene, for example. The cathode area is conductive thanks to a hydroxide solution that forms. In the case of the later examples, only distilled water was added. The volume of the anode area can be advantageously reduced by, for example, using two polyethylene cylinders.

The optimum current intensities to be used in individual cases depend on the conductivity, i.e. on the salt concentration of the solution in the anode and cathode areas.

To perform the process stage, a wide variety of known electrolysis cells with corrosion-resisant electrodes are suitable.

In accordance with a particularly advantageous embodiment of the invention, electrolysis cells are used with an anode material of titanium coated with noble-metal oxides (e.g. of platinum, rhodium and iridium and certain combinations thereof), which is particularly corrosion-resistant. Cells of this type are commercially available, for example under the designation enViro-Cell® from the company of the same name.

In accordance with a particularly advantageous embodiment of the invention, H₂O₂ is continuously added and the residues flowing through the anode area of the electrolysis units are directly subjected using a falling film reactor (made by Roeder, Jung & Partner) to high-pressure UV radiation. This combination permits a particularly rapid further CSB reduction and furthermore very extensive destruction of the EDTA/PDTA complexes.

Anodic post-oxidization with H₂O₂ addition and high-pressure UV radiation permits a rapid and very extensive EDTA/PDTA elimination up to the analytically ascertainable limit, and at the same time very low iron contents in the filtered waste water.

### e) filtration

The waste water subjected to anodic post-oxidization is slightly alkaline. The iron contained in the waste water is present as hydroxide.

The waste water is now advantageously acidified, preferably to a pH value of 4, and after mixing with lime milk and water glass rendered alkaline again using caustic soda solution. After the addition of the conventional and known flocculation agents, the precipitated sludges can be easily filtered and the solids disposed of. The waste water freed of the precipitates can then be discharged into the sewage system.

### Drawing

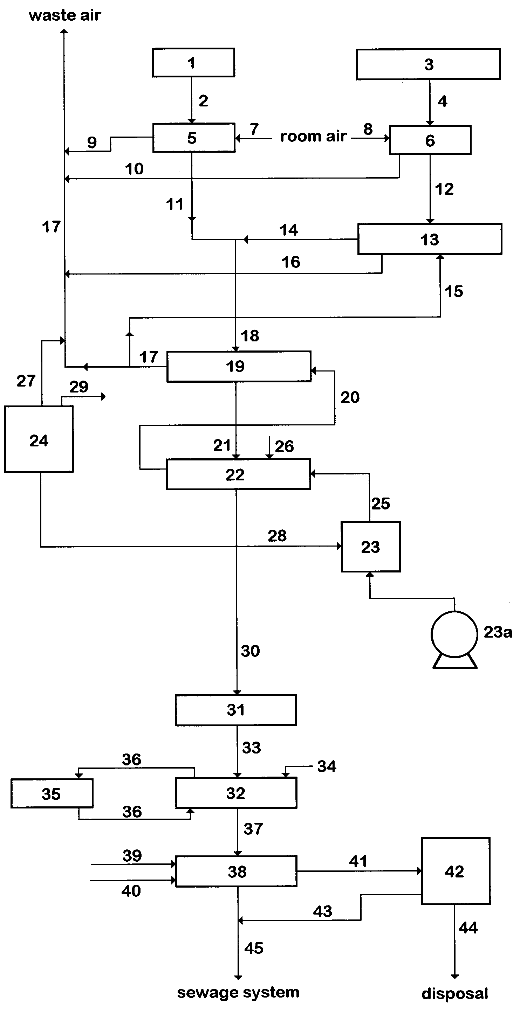

The drawing is intended for more detailed explanation of the invention.

The case shown is that of treatment of separately collected thiosulfate-containing and thiosulfate-free undiluted residues, i.e. developer residues on the one hand and fixing baths/bleach fixing baths and bleaching baths on the other hand.

As the drawing shows, the thiosulfate-free residues from photographic processes collected in the collecting tank 1 are passed via the line 2 to the tank 5, in which the oxygen oxidization is performed, for example by blowing in air or loading of air using a suction jet supplied via line 7.

The thiosulfate-holding liquid residues from photographic processes are passed from the collecting tank 3 via the line 4 to the tank 6 in which the oxygen oxidization takes place, for example by blowing in air or by loading using a suction jet of air supplied via line 8. Lines 9 and 10 are for waste air discharge.

After completed oxygen oxidization, the thiosulfate-containing air-oxidized residues are passed via the line 12 into the electrolysis system 13, which comprises a tank with pH value control, a pump transfer system and electrolysis cell. Several electrolysis cells can be used if necessary, connected up in parallel or in series, instead of one electrolysis cell. With one or more suction jets, the oxygen in the waste air 17 from ozone oxidization is passed to the electrolysis system 13 via the line 15. The electrolysis system 13 is connected via the line 16 to the waste air system 17.

After completion of oxygen oxidization of the thiosulfate-free residues and electrolytic oxidization of the thiosulfate-containing residues, the latter are passed in a suitable mix ratio via the lines 11 and 14 and then together via the line 18 to the tank 19 and there subjected to pre-ozoning with the waste air flow 20 from the tank 22, which contains oxygen and residual ozone. The pre-ozoned waste water is passed via the line 21 to the tank 22 and subjected to the ozone treatment proper. Instead of two ozone treatment tanks, several can also be used as necessary.

The ozone required is produced in the ozone generator 23 in the pure oxygen flow obtained from the liquid oxygen 23a and passed via the line 25 in the form of an ozone/oxygen mixture into the tank 22 from underneath and there brought into as intensive a contact as possible with the waste water. If several tanks are connected up one behind the other, the oxygen mixture in each tank is passed from underneath to the waste water or the waste air of a tank is passed from underneath to the previous tank on the cascade principle.

For enhancing the effect of the oxidization with ozone, hydrogen peroxide is added steadily via the line 26.

Ozone monitoring of the waste air and the room air via the lines 27, 28 and 29 (when the ozone generator is separately disposed) can advantageously be achieved using an ozone monitoring device 24 that switches off the ozone generator 23 when a certain ozone concentration value is exceeded.

The residues are taken from the ozoning tank 22 via the line 30 and pass to the interim storage tank 31 for subsequent electrolysis. The residues are passed to the electrolysis/UV-light treatment stations 32/35 via the line 33. In the electrolysis station 32 the residues are subjected to anodic oxidization with the continuous addition of hydrogen peroxide via the metering system 34, the residues being subjected to UV radiation in an additional circuit 36. The electrolysis cells of the electrolysis station 32 can have a structure corresponding to that of the electrolysis cells used for thiosulfate oxidization. It has however proved particularly advantageous to use commercially available enViro cells, i.e. round cells with a polypropylene housing modified as follows: a cylinder of polyethylene was inserted between the anode and the housing wall in order to reduce the anode volume and thereby increase the flow. The anode comprised a conventional titanium expanded metal cylinder with a surface coated with noble metal oxides (metals of the platinum group, as described above). The cathode was, instead of a metal rod surrounded by granulated carbon, a cylinder of expanded titanium with a noble metal oxide coating, as in the case of the anode. The cathode was surrounded by a cylinder of porous polyethylene serving as the diaphragm and a further open cylinder of polyethylene for a further volume reduction of the anode.

Radiation with light from high-pressure UV lamps is preferably without contact in the falling film reactor. These electrolyzed and irradiated residues are passed to the iron hydroxide precipitation tank 38 via the line 37. In the tank 38 a pH value of 4 is set by adding sulfuric acid via the line 39, then lime milk and water glass are added manually or automatically in a certain ratio, followed by setting of the pH value to 8 using caustic soda solution via the line 40. When the pH value is 8, a flocculation agent is added manually or automatically to coarsen the iron hydroxide flakes.

After settling of the solids in the tank 38, the clear liquid above it can be drained off via a control tank (for sampling purposes) and via the line 45 into the public sewage system.

The residues, which comprise in particular iron hydroxide, are passed to the filter station 42 via the line 41. Here the liquid portion is passed via the lines 43 and 45 to the public sewage system. The solid residue of the filter station is passed via mobile collecting tanks for disposal.

The residues are conveyed through the system by pumps, which have been omitted from the drawing for the sake of clarity.

The following examples are intended to explain the invention in greater detail.

### Example 1

In a treatment facility as shown in the drawing, but without the treatment steps 32, 34 and 35, a daily quantity of 2.6 m³ of exhausted developing solution (part residue A) and 1.4 m³ of exhausted and desilvered fixing baths, bleach fixing baths and bleaching baths from a photographic laboratory, diluted with about 15 % water (part-residue B), were treated.

The part-residue A contained a maximum of 30 kg of sulfite, the CSB value was about 91 kg of O₂. The sulfite content of part-residue B was about 5 kg and the CSB content around 90 kg of O₂. In the aeration stations 5 and 6, the part-residues A and B were treated with air oxygen long and intensively according to the suction jet principle until the sulfite content of the part-residue A was only about 2 kg and the CSB value had fallen to about 85 kg of O₂. In the case of the part-residue B, the sulfite content was reduced to practically zero. The thiosulfate content of the part-residue B was after aeration about 20 kg and the CSB value approx. 86 kg of O₂.

The part-residue B was then subjected in the electrolysis station 13 to an anodic oxidization intensified by oxygen loading. In this example, the electrolysis station 13 comprised 12 cells that differed in their design as follows from commercially available cells of the enViro Cell ER/1/TC-KF type (made by Deutsche Carbone): each cell comprised a round cell with internal anode and external cathode. The anode consisted of a titanium expanded metal cylinder with noble metal oxide coating, as already described. The cathode comprised a special steel cylinder close up against the inner cell wall. Between the anode and the cathode a porous polyethylene film contacting the cathode surface was inserted. Unlike a genuine membrane, the film was open at the bottom of the cell, hence forming a kind of "pseudo-membrane". This did not cause any real separation of the anode and cathode liquid. The flow of anodically oxidized liquid directly onto the cathode was however largely prevented in this way and hence also the immediate reduction as the back-reaction. The cells were used in groups each comprising 4 cells arranged in parallel, each group with a pump transfer system and suction jet ensuring the loading of oxygen from the ozone reactor waste air. Each cell was operated with 10 A/2.1 V. The pH value was kept at about 4.

After leaving the electrolysis station 13, the sulfite content of the part-residue B was practically zero and the thiosulfate content was about 1 kg. The CSB content was about 75 kg of O₂.

The part-residue B leaving the electrolysis station 13 was now combined with the part-residue A from the aeration station 5 in a mix ratio of about 1:2. This total residue of 4 m³ contained about 3 kg of sulfite/thiosulfate and had a CSB value of 160 kg of O₂.

In the ozoning tanks 19 and 22, the residues were subjected to ozone oxidization until the sulfite/thiosulfate content had fallen to practically zero, the NH₄-N value was about 6 kg, the CSB value 80 kg of O₂ and the complexing agent quantity EDTA/PDTA no more than 1.2 kg.

The ozone generator 23 used had a capacity of 4 kg of ozone per hour. The H₂O₂ quantity metered in was 15 liters (35 %) per hour and the pH value was set to 8. The residue from the ozoning tank 22 was supplied to the interim storage tank 31 and from there passed to the iron hydroxide precipitation tank 38.

By the addition of 20 % sulfuric acid via the line 39, the tank content was set to a pH value of 4, to which lime milk and water glass solution were added manually. A pH value of 8 was then set using caustic soda solution (30 %) via line 40, and a flocculation agent (Sedipur CF 404 from BASF) was added manually. The iron hydroxide was filtered off once settled in the filter station 42. The clear solution above it could be drained off directly.

The liquid residue leaving the filter station was free of sulfite/thiosulfate, contained only about 3 kg of NH4-H, no more than 0.6 kg of EDTA/PDTA, less than 0.040 kg of iron and less than 0.004 kg of silver. The CSB value was about 68 kg of O₂. This residue could be discharged into the public sewage system after dilution with other waste (in view of the relatively high sulfate content).

About 60 kg of water-containing iron hydroxide was separated out and disposed of in the filter station 42. Drying was dispensed with.

### Example 2

The process described in Example 1 was repeated up to treatment step 31, the interim storage tank after ozoning. At this point an electrolysis treatment, supported with H₂O₂ and UV light - treatment 32, 34, 35, 36 and 37, was integrated. This change in the process compared with Example 1 was performed in the 100 to 200 liter scale.

The residue from the ozoning tank 22 was supplied via the interim storage tank 31 to the electrolysis station 32, which was supplemented by the falling film reactor 35 and the H₂O₂ metering system 34. In anodic oxidization, supplemented by high-pressure UV radiation and H₂O₂, it was possible to reduce the CSB value after ozoning by approximately half, while simultaneously reducing the EDTA/PDTA content to a few milligrams per liter or to 0.010 - 0.020 kg per 4 m³. During electrolysis 32, about 50 A was used with a current density of 50 - 60 mA/cm³, 1 liter of hydrogen peroxide was added per 100 liters of residue, the pH value was kept to 7 - 8 and a 4 kW high-pressure burner was used in the falling film reactor 35.

In the further treatment stages 38 to 42 for iron precipitation, performed as set forth in Example 1, further reductions in the CSB and EDTA values resulted in the same percentage level as in Example 1.

## Claims

1. A process for the treatment of liquid residues from photographic processes, in which said residues are oxidized in stages and precipitated solid constituents are then separated, characterized in that the residues to be treated are subjected to:
(a) oxygen oxidization and to
(b) oxygen-supported mild anodic oxidization and then
(c) ozone oxidization and
(d) are freed of precipitated solids by filtration after pH value setting and loading of auxiliary substances.

2. A process according to Claim 1, characterized in that said residues to be treated are after performance of steps a) to c) subjected to an additional anodic post-oxidization preferably supported by irradiation with UV light and addition of H₂O₂.

3. A process according to Claim 1, characterized in that residues without thiosulfate are subjected to the process steps a), c) and d) in undiluted form.

4. A process according to Claim 1, characterized in that thiosulfate-containing residues are subjected in moderately diluted form to an oxygen-supported mild anodic oxidization, after oxygen oxidation according to stage a) and before ozone oxidization according to stage c).

5. A process according to Claim 4, characterized in that residues without thiosulfate on the one hand and thiosulfate-containing residues on the other hand are subjected separately from one another to oxygen oxidization according to stage (a) and said thiosulfate-containing residues are anodically oxidized before being subjected to ozone oxidization according to stage c), and in that said two differently treated residues are combined and subjected to ozone oxidization according to stage (c).

6. A process according to Claims 1 to 5, characterized in that the oxygen oxidization according to stage (a) is performed in two or more part-stages.

7. A process according to Claims 1 to 6, characterized in that the residues are treated in stage (a) with air or another gas containing oxygen until at least 90 % of the oxygen originally present has been oxidized to sulfate.

8. A process according to Claim 6, characterized in that the oxygen oxidization according to stage (a) is performed in the first part-stages with room air or with other gases containing oxygen using the suction jet principle.

9. A process according to Claim 1, characterized in that the residues containing thiosulfate and complexing agents are subjected to anodic oxidization until the thiosulfate content has been reduced by 95 %.

10. A process according to Claim 9, characterized in that the anodic oxidization is performed with very low current intensity.

11. A process according to Claim 9, characterized in that the anodic oxidization is performed with low current intensity and with a high concentration of dissolved oxygen in the residue.

12. A process according to Claim 11, characterized in that the higher dissolved oxygen content in the residue is achieved by the loading of oxygen using suction jets.

13. A process according to Claim 12, characterized in that oxygen loading using suction jets is achieved by using the ozone reactor waste air.

14. A process according to Claim 12, characterized in that the mixed residues from stage a) and stage b) are treated with ozone until the CSB value has been reduced by at least 50 % and the EDTA/PDTA by at least 75 %.

15. A process according to Claim 14, characterized in that ozone oxidization (c) is supported by H₂O₂.

16. A process according to Claims 1 to 15, characterized in that the residual oxygen generated during ozone oxidization in stage (c) is used for anodic oxidization (b).

17. A process according to Claim 15, characterized in that H₂O₂ addition during ozoning is selected large enough to ensure as short an ozoning time as possible.

18. A process according to Claim 2, characterized in that stage (d) is performed in at least one electrolysis cell.

19. A process according to Claim 18, characterized in that the residues are passed through electrolysis cells with separate anode and cathode areas.

20. A process according to Claim 18, characterized in that electrolysis cells are used in which the volume of the anode areas is greatly reduced by plastic cylinders.

21. A process according to Claim 18, characterized in that electrolysis cells are used whose cathode liquid generates itself using added distilled water.

22. A process according to Claim 18, characterized in that anodes and cathodes made of titanium coated with noble metal are used.

23. A process according to Claim 2, characterized in that anodic post-oxidization is supported by steady H₂O₂ additions.

24. A process according to Claim 2, characterized in that anodic post-oxidization is enhanced by UV light from a high-pressure lamp in a falling film reactor.

25. A process according to Claim 2, characterized in that the waste water is subjected to anodic post-oxidization until the EDTA/PDTA is less than 20 mg/l.

26. A process according to Claim 1, characterized in that the ozone required for ozone oxidization in stage (c) is generated in an ozone generator fed with pure oxygen from liquid oxygen or compressed air.

27. A process according to Claim 1, characterized in that an easy-to-separate solids precipitation is generated by pH value reduction, auxiliary agent addition, pH value increase and flocculation agent addition.

28. A device for performing the process according to Claims 1 to 27 having at least one aeration station (5) for oxygen oxidization of the thiosulfate-free liquid residues, at least one aeration station (6) for oxygen oxidization of the liquid residues containing thiosulfate, at least one electrolysis station (13) for anodic oxidization, at least two ozoning stations in series (19/22) for ozone oxidization of the residues oxidized in said aeration stations (5/6) and said electrolysis station (13), optionally at least one electrolysis station (32) for performing anodic post-oxidization with UV light (35), and an iron hydroxide precipitation station (38) with iron hydroxide filtration (42) for removing precipitated solids.

29. A device for performing the process according to Claims 3 to 27 having collecting tanks for collecting thiosulfate-free and thiosulfate-containing residues, in combination with aeration stations (1, 3) for oxygen oxidization of the thiosulfate-free and thiosulfate-containing residues, an electrolysis station (13) for anodic oxidization of said thiosulfate-containing residues, at least one ozoning station (19, 22) for ozone oxidization of said residues, an electrolysis station with UV (32, 35) for anodic oxidization, and an iron hydroxide precipitation station (38) with filter station (42) for separating precipitated solids.
